(19) Europäisches Patentamt
European Patent Office
Office européen des brevets

(11) Veröffentlichungsnummer : **0 303 207 B1**

# (12) EUROPÄISCHE PATENTSCHRIFT

(45) Veröffentlichungstag der Patentschrift :
**17.07.91 Patentblatt 91/29**

(51) Int. Cl.$^5$ : **C09D 4/02,** B01F 17/14, C09D 7/14

(21) Anmeldenummer : **88112835.9**

(22) Anmeldetag : **06.08.88**

## (54) Wässrige Beschichtungsstoffe auf Basis von Sekundärdispersionen Carboxylgruppen enthaltender Copolymerisate von Acrylsäure- oder Methacrylsäure-estern.

(30) Priorität : **14.08.87 DE 3727112**

(43) Veröffentlichungstag der Anmeldung :
**15.02.89 Patentblatt 89/07**

(45) Bekanntmachung des Hinweises auf die Patenterteilung :
**17.07.91 Patentblatt 91/29**

(84) Benannte Vertragsstaaten :
**AT BE CH DE ES FR IT LI NL**

(56) Entgegenhaltungen :
**EP-A- 0 091 021**
**CHEMICAL ABSTRACTS, Band 92, Nr. 24, 16. Juni 1980, Seite 80, Zusammenfassung Nr. 199866q, Columbus, Ohio, US; & JP-A-80 16 031 (SHIRAISI CHUO KENKYUSHO K.K.) 04-02-1980**

(73) Patentinhaber : **BASF Aktiengesellschaft**
**Carl-Bosch-Strasse 38**
**W-6700 Ludwigshafen (DE)**

(72) Erfinder : **Neubert, Gerhard, Dr.**
**Panoramastrasse 11**
**W-6719 Battenberg (DE)**

EP 0 303 207 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Beschichtungen, die unter Verwendung der üblichen wäßrigen Primärdispersionen als Bindemittel hergestellt werden, quellen im Vergleich zu Beschichtungen, die als Bindemittel in organischen Lösemitteln lösliche Copolymerisate enthalten, relativ schnell und stark bei Einwirkung von Feuchtigkeit unter Wasseraufnahme auf und werden dadurch für korrosivwirkende Substanzen, wie Sauerstoff, Kohlendioxid, Schwefeldioxid und Salze, durchlässig. Die Beschichtungsfilme verlieren dadurch weitgehend ihre Schutzfunktion für den darunterliegenden Werkstoff sowie die Haftfestigkeit darauf und bieten dann einer mechanischen Beanspruchung nur noch wenig Widerstand. Derartige Beschichtungen eignen sich daher im allgemeinen nicht oder nur bedingt für den Schutz von Metallen und vielen anderen Werkstoffen gegen witterungsbedingte Korrosion oder für Beschichtungen zur Markierung von Straßen und dgl.. Wäßrige Beschichtungsstoffe auf Basis von Primärdispersionen haben sich daher für Anwendungsgebiete, bei denen starke korrosive Beanspruchungen auftreten können, im allgemeinen nicht gegen die in einem organischen Lösemittel gelösten Beschichtungsstoffe durchsetzen können.

Aus der EP-PS 91 012 und der DE-OS 35 43 361 sind wäßrige Sekundärdispersionen bekannt, die bei dem Einsatz in wäßrigen Beschichtungsstoffen, die bei Verwendung der Primärdispersionen resultierenden Nachteile nicht mehr aufweisen. Bei der Herstellung von Pigmenten bzw. Füllstoffe enthaltenden wäßrigen Beschichtungsstoffen auf Basis der bekannten Sekundärdispersionen stößt man jedoch auf Probleme anderer Art. In vielen Fällen tritt bereits kurz nach der Herstellung der pigmentierten wäßrigen Beschichtungsstoffe eine Wasserunverträglichkeit der Bestandteile ein, so daß es zu Koagulation und Ausbildung von 2 Phasen kommt. In anderen Fällen bildet sich erst nach längerer Lagerung der wäßrigen pigmentierten Beschichtungsstoffe eine Wasserunverträglichkeit aus, die auch hier dazu führt, daß die Beschichtungsstoffe nicht mehr brauchbar sind. Dieser gravierende Nachteil macht sich um so mehr bemerkbar, je höher die Säurezahl des Bindemittels (z.B. über 40) und je höher der K-Wert der Copolymerisate (z.B. oberhalb von 22) liegt. Diese Nachteile können auch nicht dadurch behoben werden, daß man die Pigmente bzw. Füllstoffe mit Hilfe eines bekannten Dispergiermittels auf Basis von niedrigmolekularen Polyacrylsäuren oder polyphosphorsauren Salzen behandelt. Die Anwesenheit von derartigen Pigmentdispergiermitteln in den pigmentierten Beschichtungsstoffen auf Basis der Sekundärdispersionen führt vielmehr noch zu einer weiteren Verringerung der Stabilität der Beschichtungsstoffe gegenüber den dispergiermittelfreien Beschichtungsstoffen. Zur Herstellung von wäßrigen Beschichtungsstoffen auf Basis der Sekundärdispersionen ist man daher auf unpigmentierte, niedrig pigmentierte oder gegenüber dem Bindemittel vollkommen inerte Pigmente bzw. Füllstoffe, wie Eisenoxidrot, Schwerspat und spezielle Rutil-Typen angewiesen. Nur in diesen Fällen erhält man wäßrige Beschichtungsstoffe, die eine ausreichende Lagerbeständigkeit besitzen. Da die meisten Pigmente oder Füllstoffe Verunreinigungen von Calcium- bzw. Magnesiumverbindungen aufweisen, die mit Bindemitteln von Beschichtungsstoffen reagieren, führt ihre Verwendung in Beschichtungsstoffen zu einer nachteiligen Beeinträchtigung der Stabilität der Mischungen.

Der Erfindung liegt die Aufgabe zugrunde, pigmentierte, wäßrige Beschichtungsstoffe auf Basis von Sekundärdispersionen mit einer gegenüber den bekannten Beschichtungsstoffen verbesserten Lagerbeständigkeit zur Verfügung zu stellen. Eine weitere Aufgabe besteht darin, pigmentierte, wäßrige Beschichtungsstoffe aufzuzeigen, die zu Beschichtungen führen, deren Schutzeigenschaften gegen umweltbedingte korrosive Einflüsse gegenüber den bekannten Mitteln verbessert sind.

Die Aufgabe wird erfindungsgemäß gelöst mit wäßrigen Beschichtungsstoffen auf Basis von Sekundärdispersionen Carboxylgruppen enthaltender Copolymerisate von Acrylsäure- oder Methacrylsäureestern, Pigmenten oder Füllstoffen sowie gegebenenfalls üblichen Hilfsstoffen, wenn die Beschichtungsstoffe

(A) wäßrige Sekundärdispersionen von Carboxylgruppen enthaltenden Copolymerisaten von Acrylsäure- oder Methacrylsäureestern mit einer Säurezahl von 15 bis 150 und einem K-Wert von 22 bis 50 als Bindemittel.

(B) mindestens 5 Gew.%, bezogen auf den Feststoffgehalt der Bindemittel (A), an Pigmenten und/oder Füllstoffen, die jeweils eine Calzium- oder Magnesiumverbindung enthalten oder daraus bestehen und

(C) 0,1-10 Gew.%, bezogen auf die Bestandteile (B), Phosphorsäuremonoester, deren Alkoholkomponente sich von Verbindungen der Formel

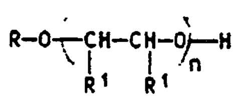 ableitet,

in der

R = $C_4$- bis $C_{24}$-Alkyl, Phenyl, $C_1$- bis $C_{18}$-Alkylphenyl
$R_1$ = H, $CH_3$, $C_2H_5$ und
n = 1 bis 50 ist,

als Dispergiermittel enthalten, wobei die Volumenkonzentration der Komponente (B), bezogen auf die Feststoffe (A) und (B), 2 bis 70 Vol.% beträgt.

Der Vorteil der erfindungsgemäßen Beschichtungsstoffe im Vergleich zu herkömmlichen wäßrigen Beschichtungsstoffen auf der Basis von wäßrigen Primärdispersionen von Polymerisaten ist vor allem durch die bessere Wasserquellfestigkeit der Beschichtungen und den dadurch bedingten besseren Schutz für die damit beschichteten Werkstoffe gegen witterungsbedingte oder andere korrosive Beanspruchungen, z.B. durch Salzsprühnebel, sowie durch die bessere Haltbarkeit der Beschichtungen bei gleichzeitig witterungsbedingten und mechanischen Beanspruchungen gegeben. Gegenüber den bekannten wäßrigen pigmentierten Beschichtungsstoffen auf Basis von Sekundärdispersionen zeichnen sich die erfindungsgemäßen Beschichtungsstoffe überraschenderweise durch eine entscheidend verbesserte Lagerstabilität aus. Es ist vor allem auch möglich, hochpigmentierte Beschichtungsstoffe mit einer guten Lagerstabilität herzustellen.

Als Bindemittel (A) werden wäßrige Sekundärdispersionen von Carboxylgruppen enthaltenen Copolymerisaten von Acrylsäure- oder Methacrylsäureestern mit einer Säurezahl von 15-150, vorzugsweise 20-80 und insbesondere 25-50 und einem K-Wert von 22-50, vorzugsweise 28 bis 40 verwendet. Die Herstellung derartiger Bindemittel wird beispielsweise in der EP-PS 91 021 und in der DE-OS 35 43 361 beschrieben. Die Bindemittel (A) sind z.B. erhältlich durch Copolymerisieren von

(a) 80-98,5 Gew.% mindestens eines Esters der Acrylsäure oder Methacrylsäure mit einem 1-20 Kohlenstoffatome enthaltenden geradkettigen oder verzweigten Monoalkohol, wobei diese Acrylsäure- oder Methacrylsäureester bis zu 65 Gew.% durch Vinylaromaten, insbesondere Styrol, copolymerisierbare Vinylester mit 4 bis 14 Kohlenstoffatomen oder copolymerisierbare olefinisch-ungesättigte Dicarbonsäurediester mit 6-32 Kohlenstoffatomen ersetzt sein können.

(b) 1,5-20 Gew.% mindestens einer copolymerisierbaren, olefinischungesättigten 3-10 Kohlenstoffatome enthaltenden organischen Verbindung mit mindestens einer Carboxyl- oder Carbonsäureanhydridgruppe und

(c) 0-30 Gew.% weiterer, unter (a) und (b) nicht genannter copolymerisierbare olefinisch ungesättigte organischer Verbindungen, die eine hydrophile Gruppe aufweisen, mit der Maßgabe, daß die Summe der unter (a) bis (c) genannten Prozentzahlen gleich 100 ist und die Copolymerisation in einem organischen, mit Wasser zumindest teilweise mischbaren Lösemittel durchgeführt, das resultierende Copolymerisat unter Zusatz von Ammoniak oder Aminen in Wasser dispergiert und anschließend gegebenenfalls das überschüssige Lösemittel abdestilliert wird.

Als Komponente (a) kommen Ester der Acrylsäure oder Methacrylsäure mit einem 1-20 Kohlenstoffatome enthaltenden geradkettigen oder verzweigten Monoalkohol in Betracht, z.B. Methylacrylat, Ethylacrylat, Isopropylacrylat, Methylmethacrylat, n-Acrylat, n-Butylmethacrylat, Isobutylacrylat, Isobutylmethacrylat, Tertiärbutylacrylat, 2-Ethylhexylacrylat, 2-Ethylhexylmethacrylat, Laurylacrylat sowie Gemische der genannten Ester. Vorzugsweise verwendet man n-Butylacrylat, Isobutylacrylat und 2-Ethylhexylacrylat.

Als Vinylaromaten, die die Acrylsäure- und Methacrylsäureester teilweise ersetzen können, eignen sich z.B. Styrol und Vinyltoluol. Die Vinylaromaten können die (Meth)acrylsäureester bis zu 65, vorzugsweise 20-50 Gew.% ersetzen. Die (Meth)acrylsäureester können auch teilweise durch Vinylester mit 4-14 Kohlenstoffatomen oder durch copolymerisierbare olefinisch ungesättigte Dicarbonsäurediester mit 6-32 Kohlenstoffatomen ersetzt sein. Als Vinylester kommen beispielsweise Vinylacetat, Vinylpropionat und als Dicarbonsäurediester solche der Maleinsäure in Betracht, z.B. Maleinsäure-di-n-butylester oder Maleinsäure-di-isobutylester. Die Komponente (a) besteht vorzugsweise aus einer Mischung von mindestens einem hartmachenden Monomeren, wie Methylmethacrylat, Isobutylmethacrylat, Tertiärbutylacrylat oder Styrol und mindestens einem weichmachenden Monomeren, z.B. Acrylsäureester von $C_2$ bis $C_{18}$ Monoalkoholen.

Als Komponente (b) kommen copolymerisierbare, olefinisch ungesättigte, 3-10 Kohlenstoffatome enthaltende organische Verbindungen mit mindestens einer Carboxyl- oder Carbonsäureanhydridgruppe in Frage, z.B. Acrylsäure, Methacrylsäure, Maleinsäure, Itaconsäure bzw. die Anhydride oder Halbester dieser Dicarbonsäuren. Die Anhydridgruppen der Copolymerisate können vor dem Neutralisieren mit Ammoniak, beispielsweise durch Erwärmen mit 1-8 Kohlenstoffatome enthaltenden Alkoholen oder Glykolethern in die entsprechenden Halbestergruppen enthaltenden Copolymerisate überführt werden. Beispiele für solche Alkohole bzw. Glykolether sind Ethanol, Isopropanol, Butanol und Butylglykol. Vorzugsweise verwendet man als Monomere der Komponente (b) Acrylsäure, Itaconsäure und Maleinsäure anhydrid. Die Monomeren der Komponente (b) sind zu 1,5-20, vorzugsweise 2-9 Gew.% einpolymerisiert.

Als Komponente (c) der Copolymerisate kommen unter (a) und (b) nicht genannte copolymerisierbare, olefinisch ungesättigte organische Verbindungen in Betracht, die eine hydrophile Gruppe aufweisen. Hierbei handelt es sich beispielsweise um Monoacrylate und Monomethacrylate von Alkandiolen, z.B. Hydroxyethylacrylat, Hydroxyethylmethacrylat, Hydroxypropylacrylat, Hydroxypropylmethacrylat, Butandiolmonoacrylat und Butandiolmonomethacrylat, sowie um Acrylamid, Methacrylamid, Acrylnitril und Methacrylnitril.

Besonders bevorzugt zum Einsatz als Bindemittel (A) zu verwendende Copolymerisate erhält man, wenn man die oben angegebenen Monomeren (a) bis (c) in spezieller Weise der Copolymerisation unterwirft. Man erhält dann ein Copolymerisat das zu 25 bis 75 Gew.% aus einer Komponente I und zu 25 bis 75 Gew.% aus einer Komponente II besteht, wobei die Summe der unter I und II genannten Prozentzahlen 100 beträgt. Die Komponente I ist dabei ein Copolymerisat, das

(a) 80-98,5 Gew.% mindestens eines Esters der Acryl- oder Methacrylsäure mit einem 1-20 Kohlenstoff enthaltenden Monoalkanol ohne weitere funktionelle Gruppe, wobei bis zu 65 Gew.% dieser Acryl- oder Methacrylsäureester durch Vinylaromaten ersetzt sein können,

(b) 1,5-20 Gew.% mindestens einer copolymerisierbaren, olefinisch ungesättigten 3-10 Kohlenstoffatome enthaltenen organischen Verbindung mit mindestens einer Carboxyl- oder Carbonsäureanhydridgruppe und

(c) 0-30 Gew.% weiterer, unter (a) und (b) nicht genannter Carboxyl- und Carbonsäureanhydridgruppen freier copolymerisierbarer, olefinisch ungesättigter organischer Verbindungen einpolymerisiert enthält, wobei die Summe der unter (a) bis (c) genannten Prozentzahlen immer 100 beträgt. Diese Komponente des Copolymerisats entspricht dem Copolymerisat, das aus der EP-PS 91 021 bekannt ist. Das Bindemittel (A) enthält jedoch vorzugsweise noch eine Komponente II, bei der es sich um ein ausschließlich aus den Comonomeren der Gruppen (a) und (c) aufgebautes Copolymerisat handelt. Wesentlich ist dabei, daß zunächst eine der beiden Komponenten I oder II in einem organischen Lösemittel oder in Substanz polymerisiert wird und daß in der so erhaltenen Polymerlösung bzw. Schmelze des Polymeren dann die andere Komponente der Copolymerisation unterworfen wird. Die so resultierende Mischung der Copolymerisate der Komponenten I und II wird dann unter Zusatz von Ammoniak oder Aminen in Wasser dispergiert. Falls erforderlich, wird das überschüssige organische Lösemittel abdestilliert. Die den Bindemitteln (A) zugrundeliegenden Copolymerisate werden durch Substanzpolymerisation oder Lösungspolymerisation hergestellt. Besonders bevorzugt ist die Polymerisation in Gegenwart zumindest eines Teils bis zum Lösen der Copolymerisate erforderlichen mit Wasser vollständig mischbaren organischen Lösemittels. Die Polymerisation kann auch in aromatischen Kohlenwasserstoffen durchgeführt werden, z.B. in Toluol oder Xylol. Diese inerten Lösemittel werden beim Lösen der Polymerisate in Wasser emulgiert. Überschüssiges Lösemittel, das in der Dispersion bzw. in der Lösung verbleibt, kann später bei der Verfilmung der erfindungsgemäßen Beschichtungsstoffe als Filmbildehilfsmittel dienen. Derartige Lösemittel sind beispielsweise höhersiedende Aromaten mit einem Siedebereich zwischen etwa 120 und 220°C oder bevorzugt mit Wasser mischbare Lösemittel, wie z.B. Butylglykol, Butyldiglykol, Methoxypropanole, Isopropoxypropanole und n-Propanol.

Die Sekundärdispersionen werden aus den Lösungen bzw. Schmelzen der Copolymerisate hergestellt. Der Feststoffgehalt der Polymerisatlösungen beträgt vorzugsweise 60 bis etwa 90 Gew.%. Diese Copolymerisatlösungen bzw. die Polymerschmelzen werden dann mit ammoniak oder Aminen, z.B. Trimethylamin, Triethylamin, Dimethyläthanolamin, versetzt und in Wasser dispergiert bzw. gelöst. Man erhält auf diese Weise stabile Dispersionen, bzw. Lösungen mit einem pH-Wert in dem Bereich von 7,0 bis über 10. Der Feststoffgehalt der Dispersionen beträgt etwa 25 bis 60 Gew.%. Falls Dispersionen mit einem besonders niedrigen Gehalt an organischen Lösemittel gewünscht sind, kann das in den Dispersionen vorhandene organische Lösemittel azeotrop abdestilliert werden. Der Feststoffgehalt der wäßrigen Copolymerisatlösungen beträgt 5 bis 40 Gew.%.

Die wäßrigen Beschichtungsstoffe enthalten als Komponente (B) mindestens 5 Gew.%, bezogen auf den Feststoffgehalt der Bindemittel (A), an Pigmenten und/oder Füllstoffen, die jeweils eine Calcium- oder Magnesiumverbindung enthalten oder daraus bestehen. Bei diesen Pigmenten bzw. Füllstoffen handelt es sich um natürliche vorkommende Calcite oder Dolomite, Kreide, gefälltes Calciumcarbonat oder synthetische Pigmente, wie z.B. Calciumferrite, Calciummolybdate oder auch um mit Calciumoxid modifizierte Aluminate, Silikate oder Aluminiumsilikate. Mit Ausnahme von Pigmenten und Füllstoffen auf der Basis von Zinkoxid und dessen Salze lassen sich mit allen gängigen Pigmenten und Füllstoffen lagerbeständige Beschichtungsstoffe herstellen. Als Komponente (B) kommen sämtliche Pigmente bzw. Füllstoffe in Betracht, die jeweils soviel einer Calcium- und/oder Magnesiumverbindung enthalten, daß damit mindestens 20% der Carboxylgruppen im Bindemittel (A) neutralisiert werden.

Feinteilige, an der Teilchenoberfläche calcium- bzw. magnesiumreiche Stoffe (B) koagulieren naturgemäß das anionische Bindemittel (A) schneller und vollständiger als grobteilige. Dementsprechend sind dafür auch größere Mengen des erfindungsgemäß einzusetzenden Pigmentdispergiermittels (C) erforderlich, um die gewünschte Lagerstabilität der erfindungsgemäßen Beschichtungsstoffe zu gewährleisten. Die an der Teilchenoberfläche befindlichen Calcium- bzw. Magnesiumionen reagieren mit den Carboxylgruppen des Bindemittels (A) unter Vernetzung.

Die wäßrigen Beschichtungsstoffe enthalten als Komponente (C) 0,1-10, vorzugsweise 0,5-5 Gew.% Phosphorsäuremonoester, deren Alkoholkomponente sich von Verbindungen der Formel

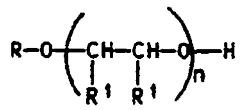 ableitet,

in der

R = $C_4$- bis $C_{24}$-Alkyl, Phenyl, $C_1$- bis $C_{18}$-Alkylphenyl
$R^1$ = H, $CH_3$, $C_2H_5$ und
n = 1 bis 50 ist.

Diese Phosphorsäuremonoester haben Säurezahlen nach DIN 53 402 von 50-600, vorzugsweise von 110-450 und insbesondere zwischen 200 und 350. Besonders bevorzugt ist der Einsatz von Phosphorsäuremonoestern, deren Alkoholkomponente sich von Verbindungen der Formel

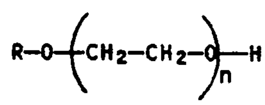 ableitet,

in der

R = $C_6$- bis $C_{18}$-Alkyl und
n = 3 bis 25 bedeutet.

Die den Phosphorsäuremonoestern zugrundeliegenden Phosphorsäure kann anteilig zur Di- oder Tri-Phosphorsäure kondensiert sein. Wichtig ist jedoch, daß pro Phosphoratom im Mittel etwa 1 Polyalkoxyalkyletherrest enthalten ist. Die Dispergiermittel (C) werden vorzugsweise in Mengen von 0,5-5 und insbesondere 0,7-3,0 Gew.%, bezogen auf die Bestandteile (B) der wäßrigen Beschichtungsmasse, eingesetzt. Andere, sonst für die Pigmentdispergierung üblicherweise verwendeten Dispergiermittel auf Basis niedrigmolekularer Polycarbonsäuren oder von Salzen der Polyphosphorsäure können höchstens in Mengen bis zu etwa 0,1 Gew.%, bezogen auf (B), mitverwendet werden. Sobald die wäßrigen Beschichtungsstoffe nämlich größere Mengen dieser Dispergiermittel enthalten, wird die Lagerstabilität der Beschichtungsstoffe nachteilig beeinflußt.

Die Herstellung der erfindungsgemäßen Beschichtungsstoffe kann in einzelnen Fällen durch an sich bekanntes Dispergieren der Pigmente und Füllstoffe in einer Mischung der Komponenten (A) und (C) erfolgen. Bevorzugt ist jedoch eine Arbeitsweise, bei der man zunächst eine wäßrige Suspension von Pigmenten oder Füllstoffen (B) in Gegenwart des Dispergiermittels (C) herstellt und danach in die so erhaltene Suspension das Bindemittel (A) einarbeitet. Man erhält auf diese Weise pigmentierte, wäßrige Beschichtungsstoffe, bei denen die Pigmentvolumenkonzentration, 5-70, vorzugsweise 18-45% beträgt. Besonders bevorzugt sind wäßrige Beschichtungsstoffe, deren Pigmentvolumenkonzentration zwischen 25 und 35% liegt.

Als Neutralisationsmittel für die Phosphorsäuremonoester können die hierfür üblicherweise in Betracht kommenden Basen verwendet werden. Vorzugsweise verwendet man Ammoniak oder tert.-Amine wie Triethylamin.

Die Beschichtungsstoffe können als Bindemittel neben dem Bindemittel (A) weitere bekannte mit (A) verträgliche Bindemittel anteilig anstelle von (A) enthalten. Solche bekannten Bindemittel sind beispielsweise Primärdispersionen auf der Basis von Acrylsäureestercopolymerisaten oder wasserverdünnbare Alkydharze. Bis zu 70 Gew.% des Bindemittels (A) können gegebenenfalls durch bekannte andere wäßrige, mit (A) verträgliche Bindemittel ersetzt werden.

Als weitere Hilfsstoffe können die erfindungsgemäßen Beschichtungsstoffe die sonst für wäßrige Beschichtungsstoffe üblichen Zusätze enthalten, z.B. Entschäumer, Verdickungsmittel, Filmbildehilfsmittel bzw. Weichmacher und Lösemittel. Die Mengen dieser Produkte betragen bis höchstens 40%, bezogen auf die Komponente (A).

Die erfindungsgemäßen Beschichtungsstoffe werden als Korrosionsschutzfarbe, z.B. für Rostschutzgrundierungen, Korrosionsschutzfüllgrundierungen und -Deckanstriche oder auch als Straßenmarkierungsfarben verwendet. Sie vernetzen nach dem Auftragen auf ein Substrat, wobei die Vernetzungsreaktion bei Raumtemperatur relativ langsam bei erhöhter Temperatur jedoch beschleunigt verläuft. Die getrockneten Beschichtungen werden begrenzt lösemittelbeständig und zeichnen sich daher durch eine bessere Überstreichbarkeit mit lösemittelhaltigen Beschichtungsstoffen, eine verringerte Thermoplastizität und Rißbildungsanfälligkeit bei witterungsbedingter Beanspruchung sowie durch eine verbesserte Wasserquellfestigkeit und einen besseren Korrosionsschutz für Metalle und andere Werkstoffe aus.

Die K-Werte der Copolymerisate wurden nach H. Fikentscher, Cellulose-Chemie Band 13, Seiten 48-64 und 71-74 (1932) in Tetrahydrofuran bei einer Temperatur von 25°C und einer Polymerkonzentration von 1 Gew.% gemessen ; dabei bedeutet K = k. $10^3$.

Die Säurezahlen wurden nach DIN 53 402 gemessen und bedeuten mgKOH/g Copolymerisat. Die in den Beispielen angegebenen Teile sind Gewichtsteile.

Beispiel 1

In eine wäßrige Lösung, die durch Mischen von
25 Teilen Wasser,
5 Teilen Butyldiglykol,
1 Teil eines Phosphorsäuremonoesters mit einer Säurezahl von 270, erhalten durch Veresterung von Phosphorsäure mit den Anlagerungsprodukt von 6 Mol Ethylenoxid an 1 Mol Isodecanol,
1 Teil konzentrierter Ammoniak,
2 Teilen eines handelsüblichen Entschäumers und
0,2 Teilen eines assoziativ wirksamen handelsüblichen Verdickungsmittel auf Polyurethanbasis erhalten wird und die einen pH-Wert oberhalb von 9 hat, werden nacheinander
15 Teile mikronisiertes Eisenoxidschwarz (ca. 0,002 mm mittlerer Teilchendurchmesser)
25 Teile Microcalcit (0,002 mm mittlerer Teilchendurchmesser) und
25 Teile mikronisiertes Eisenoxidrot eingerührt (ca. 0,002 mm mittlerer Teilchendurchmesser)
und am Dissolver 20 Min. dispergiert. In die so erhaltene Pigmentsuspension werden insgesamt 100 Teile einer 45%igen wäßrig-ammoniakalischen Dispersion (Bindemittel 1) portionsweise eingetragen und gut durchmischt.

Das Bindemittel 1 wird nach der in Beispiel 1 der DE-OS 35 43 361 gegebenen Vorschrift hergestellt, indem man in einer üblichen Rührapparatur zu einer Vorlage von 120 Teilen Ethanol innerhalb von 2,5 Stunden bei 80°C eine Mischung aus 228 Teilen Styrol, 300 Teilen n-Butylacrylat, 72 Teilen Acrylsäure, 18 Teilen tert.-Butylperoctoat und 90 Teilen Ethanol gleichmäßig zulaufen läßt und die Mischung nach Beendigung der Monomerenzugabe noch 2 Stunden bei 80°C nachpolymerisiert.

Dann fügt man bei 80°C innerhalb von 2 Stunden eine Mischung aus 288 Teilen Styrol, 312 Teilen Butylacrylat, 18 Teilen tert.-Butylperoctoat und 90 Teilen Ethanol zu und polymerisiert das Reaktionsgemisch noch anschließend weitere 4 Stunden bei 80°C. Man versetzt dann mit 63,3 Teilen 25%iger wäßriger Ammoniaklösung und 1100 Teilen Wasser und destilliert im Vakuum ein Ethanol-Wasser-Gemisch ab. Bereits während der Destillation fügt man soviel Wasser zu, daß man nach dem Entfernen des Ethanols eine wäßrige Dispersion mit einem Feststoffgehalt von 45 Gew.% erhält.

Durch das oben beschriebene Vermischen der wäßrigen Lösung des Phosphorsäuremonoesters mit den Pigmenten und dem Bindemittel 1 erhält man einen wäßrigen Beschichtungsstoff mit einer Pigmentvolumenkonzentration von ca. 29%. Man fügt noch 0,2 Gew.%, bezogen auf den Gesamtansatz eines handelsüblichen Entschäumers und noch soviel des oben angegebenen handelsüblichen Verdickungsmittels zu, daß der wäßrige Beschichtungsstoff eine Viskosität von 1,5 pas (gemessen mit dem ICI-Rotothinner, Kugel) hat.

Beispiele 2-6

Wie in Beispiel 1 angegeben, werden mit den gleichen Rohstoffen jedoch den in der folgenden Tabelle aufgeführten Pigmenten und Füllstoffen sowie abgeänderten Dispersions- und Netzmittelmengen weitere wäßrige Beschichtungsstoffe hergestellt, die als Korrosionsschutzfarben einsetzbar sind :

| Beispiel Nr. | mittlerer Teilchendurchmesser [µm] | 2 | 3 | 4 | 5 | 6 | Vergleichsbeispiel 1 |
|---|---|---|---|---|---|---|---|
| | | * | * | * | * | * | * |
| Calciumferrit | 2 | 33 | 33 | | | | |
| Calciummolybdat | 2 | | | 10 | | | |
| Rutil | 3 | | | 20 | 20 | 20 | |
| Microcalcit | 3 | 28 | 28 | | 28 | 28 | |
| Microdolomit | 5 | | | 28 | | | |
| Eisenoxidrot | 2 | | | | | | 40 |
| Schwerspat | 5 | | | | 20 | 20 | 44 |
| Bindemittel 1 | | 100 | 100 | 100 | 100 | 180 | 100 |
| Phosphorsäure monoester | | 0,8 | 2 | 2 | 1 | 1 | 0,8 |

* = [Teile]

Alle Farben sind über Monate bei Raumtemperatur lagerbeständig und koagulieren nicht.

Die Farben mit größerem Phosphorsäuremonoestergehalt fallen niedrigerviskos aus und können daher mit einer größeren Menge Urethanverdicker nachverdickt werden. Sie weisen hohe Viskositätswerte bei hohem Schergefälle auf und sind daher für die Verarbeitung im Streichverfahren besser geeignet.

Zur Prüfung der Korrosionsschutzbeschichtungen werden die Farben der Beispiele 1 bis 6 auf ein entfettetes Tiefziehblech mit einer Trockenschichtdicke von 0,08 mm porenfrei aufgetragen und 1 Woche bei 23° und 65% rel. Feuchte bzw. 24 Std. bei 50° getrocknet. In analoger Weise wird die nach dem Vergleichsbeispiel 1 hergestellte Farbe geprüft.

Danach sind die Beschichtungen der Farben 1 bis 6 bei Einwirkung organischer Lösemittel, wie z.B. n-Propanol, Butylacetat oder Xylol im Gegensatz zum Anstrich der Vergleichsfarbe 1 nicht mehr auflösbar. Sie werden lediglich durch Lösemittel erweicht und angequollen, jedoch ohne zu runzeln oder infolge Hautbildung an der Oberfläche hochzuziehen, wie dies für oxidativ vernetzende Anstrichstoffe bekannt ist.

Die durchgetrockneten Anstriche der erfindungsgemäßen Beschichtungsstoffe zeichnen sich daher durch bessere Überarbeitbarkeit mit lösemittelhaltigen Beschichtungsstoffen aus. Anstrichschäden, wie "Hochziehen" oder Ablösen des Grundanstriches beim Überstreichen können so vermieden werden.

Die oben auf den Tiefziehblechen hergestellten Beschichtungen erhalten einen Schnitt und werden 300 h im Salzsprühtest nach DIN 53 167 (≙ ISO 7253/1984) vergleichend beansprucht. Die Unterwanderung und Unterrostung am Schnitt ist danach um so geringer je höher der Gehalt an Calcium- bzw. Magnesium-Ionen bildenden Füllstoffe bzw. Pigmente in der Beschichtung ist. Die Beschichtung der Vergleichsfarbe nach Vergleichsbeispiel 1 bietet einen relativ geringen Schutz.

Vergleichsbeispiel 2

Der im Beispiel 1 beschriebene Beschichtungsstoff wird ohne Zusatz des Netzmittels hergestellt, indem die Hälfte der Bindemittel-Dispersion bereits vor dem Zugeben der Pigmente und Füllstoffe als Pigmentnetzhilfe zugemischt wird. Die fertige Farbe ist instabil und koaguliert bald nach ihrer Fertigstellung.

Vergleichsbeispiel 3

Man arbeitet analog wie in Beispiel 1 beschrieben, ersetzt jedoch den Phosphorsäuremonoester durch 0,8 bzw. 0,4 Teile eines gängigen niedermolekularen Polyacrylsäure-Ammoniumsalzes als Dispergiermittel.

Die Farben koagulieren innerhalb von wenigen Stunden bzw. Tagen, wobei die Farbe mit der höheren Netzmittelkonzentration schneller eindickt und unbrauchbar wird.

Vergleichsbeispiel 4

Man verfährt wie bei der Herstellung des Beschichtungsstoffs gemäß Beispiel 1, verwendet jedoch anstelle des Phosphorsäuremonoesters polyphosphorsaures Ammoniumsalz als Dispergiermittel. Die erhaltene Farbe ist instabil.

**Patentansprüche**

1. Wäßrige Beschichtungsstoffe auf Basis von Sekundärdispersionen Carboxylgruppen enthaltender Copolymerisate von Acrylsäure- oder Methacrylsäureestern, Pigmenten oder Füllstoffen sowie gegebenenfalls üblichen Hilfsstoffen, dadurch gekennzeichnet, daß die Beschichtungsstoffe

(A) wäßrige Sekundärdispersionen von Carboxylgruppen enthaltenden Copolymerisaten von Acrylsäure- oder Methacrylsäureestern mit einer Säurezahl von 15 bis 150 und einem K-Wert von 22 bis 50 als Bindemittel,
(B) mindestens 5 Gew.%, bezogen auf den Feststoffgehalt der Bindemittel (A), an Pigmenten und/oder Füllstoffen, die jeweils eine Calcium- oder Magnesiumverbindung enthalten oder daraus bestehen und
(C) 0,1 bis 10 Gew.%, bezogen auf die Bestandteile (B), Phosphorsäuremonoester, deren Alkoholkomponente sich von Verbindungen der Formel

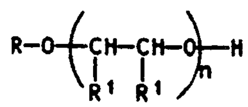 ableitet,

in der

R = $C_4$- bis $C_{24}$-Alkyl, Phenyl, $C_1$- bis $C_{18}$-Alkylphenyl
$R^1$ = H, $CH_3$, $C_2H_5$ und
n = 1 bis 50 ist,

als Dispergiermittel enthalten, wobei die Volumenkonzentration der Komponente (B), bezogen auf die Feststoffe von (A) und (B), 2 bis 70 Vol.% beträgt.

2. Wäßrige Beschichtungsstoffe nach Anspruch 1, dadurch gekennzeichnet, daß die Bindemittel (A) erhältlich sind durch Copolymerisieren von

a) 80 bis 98,5 Gew.% mindestens eines Esters der Acrylsäure oder Methacrylsäure mit einem 1 bis 20 Kohlenstoffatome enthaltenden geradkettigen oder verzweigten Monoalkanol, wobei diese (Meth-)acrylsäureester bis zu 65 Gew.% durch Vinylaromaten, copolymerisierbare Vinylester mit 4 bis 14 Kohlenstoffatomen oder copolymerisierbare olefinisch ungesättigte Dicarbonsäurediester mit 6 bis 32 Kohlenstoffatom ersetzt sein können.
b) 1,5 bis 20 Gew.% mindestens einer copolymerisierbaren, olefinisch ungesättigten 3 bis 10 Kohlenstoffatome enthaltenden organischen Verbindung mit mindestens einer Carboxyl- oder Carbonsäureanhydridgruppe und
c) 0 bis 30 Gew.% weiterer, unter a) und b) nicht genannter copolymerisierbarer olefinisch ungesättigter organischer Verbindungen, die eine hydrophile Gruppe aufweisen, mit der Maßgabe, daß die Summe der unter a) bis c) genannten Prozentzahlen gleich 100 ist und die Copolymerisation in einem organischen, mit Wasser zumindest teilweise mischbaren Lösemittel durchgeführt, das resultierende Copolymerisat unter Zusatz von Ammoniak oder Aminen in Wasser dispergiert und anschließend gegebenenfalls das überschüssige Lösemittel abdestilliert wird.

3. Wäßrige Beschichtungsstoffe nach Anspruch 1, dadurch gekennzeichnet, daß das Bindemittel (A) zu 25 bis 75 Gew.% aus einer Komponente I und zu 25 bis 75 Gew.% aus einer Komponente II besteht, wobei die Summe der unter I und II genannten Prozentzahlen 100 beträgt, Komponente I ein Copolymerisat ist, das

(a) 80 bis 98,5 Gew.% mindestens eines Esters der Acryl- oder Methacrylsäure mit einem 1 bis 20 Kohlenstoffatome enthaltenden Monoalkanol ohne weitere funktionelle Gruppe, wobei bis zu 65 Gew.% dieser Acryl- oder Methacrylsäureester durch Vinylaromaten ersetzt sein können,
(b) 1,5 bis 20 Gew.% mindestens einer copolymerisierbaren olefinisch ungesättigten 3 bis 10 Kohlenstoffatome enthaltenden organischen Verbindungen mit mindestens einer Carboxyl- oder Carbonsäureanhydridgruppe und
(c) 0 bis 30 Gew.% weitere, unter (a) und (b) nicht genannter carboxyl- und carbonsäureanhydridgruppenfreier copolymerisierbarer olefinisch ungesättigter organischer Verbindungen ist,

einpolymerisiert enthält, wobei die Summe der unter (a) bis (c) genannten Prozentzahlen immer 100

beträgt, und Komponente II ein ausschließlich aus den Comonomeren (a) und (c) aufgebautes Copolymerisat ist, mit der Maßgabe, daß zunächst eine der beiden Komponenten I oder II in einem organischen Lösemittel polymerisiert und in der so erhaltenen Polymerlösung dann die andere Komponente polymerisiert wird, die resultierende Mischung aus I und II dann unter Zusatz von Ammoniak oder Aminen in Wasser dispergiert und anschließend gegebenenfalls überschüssiges Lösemittel abdestilliert wird.

4. Wäßrige Beschichtungsstoffe nach den Ansprüchen 1 bis 3, dadurch gekennzeichnet, daß sie als Bestandteil (B) Calcit, Dolomit, Kreide, Calciumferrite, Calciummolybdate und/oder mit Calciumoxid modifizierte Aluminate, Silikate oder Aluminiumsilikate enthalten.

5. Wäßrige Beschichtungsstoffe nach den Ansprüchen 1 bis 4, dadurch gekennzeichnet, daß sie als Bestandteil (C) Phosphorsäuremonoester enthalten, deren Alkoholkomponente sich von Verbindungen der Formel

$$R-O-(CH_2-CH_2-O)_n-H$$ ableitet,

in der

R = $C_6$- bis $C_{18}$-Alkyl und
n = 3 bis 25 bedeutet.

6. Verfahren zur Herstellung der wäßrigen Beschichtungsstofe nach den Ansprüchen 1 bis 5, dadurch gekennzeichnet, daß man zunächst eine wäßrige Suspension von Pigmenten oder Füllstoffen (B) in Gegenwart des Dispergiermittels (C) herstellt und danach in die so erhaltene Suspension das Bindemittel (A) einarbeitet.

7. Verwendung der wäßrigen Beschichtungsstoffe nach den Ansprüchen 1 bis 5 als Korrosionsschutz- oder Straßenmarkierungsfarben.

## Claims

1. An aqueous coating material based on a secondary dispersion of carboxyl-containing copolymers of acrylates or methacrylates, pigments or fillers and, if required, conventional assistants, wherein the coating material contains

(A) an aqueous secondary dispersion of a carboxyl-containing copolymer of an acrylate or methacrylate having an acid number of from 15 to 150 and a K value of from 22 to 50, as the binder,
(B) not less than 5% by weight, based on the solids content of the binder (A), of pigments and/or fillers, each of which contains or consists of a calcium compound or magnesium compound, and
(C) 0.1-10% by weight, based on the components (B), of a monoester of phosphoric acid whose alcohol component is derived from a compound of the formula

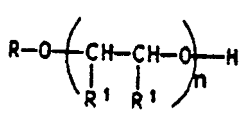

where R is $C_4$-$C_{24}$-alkyl, phenyl or $C_1$-$C_{18}$-alkylphenyl, $R^1$ is H, $CH_3$ or $C_2H_5$ and n is from 1 to 50, as a dispersant, the volume concentration of the components (B) being from 2 to 70% by volume, based on the solids of (A) and (B).

2. An aqueous coating material as claimed in claim 1, wherein the binder (A) is obtainable by copolymerization of

(a) from 80 to 98.5% by weight of one or more esters of acrylic acid or methacrylic acid with a straight-chain or branched monoalcohol of 1 to 20 carbon atoms, where up to 65% by weight of these (meth)acrylates can be replaced by vinylaromatics, copolymerizable vinyl esters of 4 to 14 carbon atoms or copolymerizable olefinically unsaturated dicarboxylic diesters of 6 to 32 carbon atoms,
(b) from 1.5 to 20% by weight of one or more copolymerizable, olefinically unsaturated organic compounds of 3 to 10 carbon atoms having one or more carboxyl or carboxylic anhydride groups and

(c) from 0 to 30% by weight of further copolymerizable olefinically unsaturated organic compounds which are not stated under (a) and (b) and have a hydrophilic group, with the proviso that the sum of the percentages stated under (a) to (c) is 100 and the copolymerization is carried out in an organic solvent which is partially or completely miscible with water, the resulting copolymer is dispersed in water with the addition of ammonia or an amine, and, if required, the excess solvent is then distilled off.

3. An aqueous coating material as claimed in claim 1, wherein the binder (A) consists of 25 to 75% by weight of a component I and from 25 to 75% by weight of a component II, the sum of the percentages stated under I and II being 100, component I is a copolymer which contains, as copolymerized units,

(a) from 80 to 98.5% by weight of one or more esters of acrylic or methacrylic acid with a monoalcohol of 1 to 20 carbon atoms without further functional groups, where up to 65% by weight of these acrylates or methacrylates can be replaced by vinylaromatics,
(b) from 1.5 to 20% by weight of one or more copolymerizable, olefinically unsaturated organic compounds of 3 to 10 carbon atoms having one or more carboxyl or carboxylic anhydride groups and
(c) from 0 to 30% by weight of further copolymerizable olefinically unsaturated organic compounds which are not stated under (a) and (b) and are free of carboxyl and carboxylic anhydride groups,

the sum of the percentages stated under (a) to (c) always being 100, and component II is a copolymer composed exclusively of the comonomers (a) and (c), with the proviso that one of the two components I or II is first polymerized in an organic solvent and the other component is then polymerized in the resulting polymer solution, the resulting mixture of I and II is then dispersed in water with the addition of ammonia or an amine, and, if required, excess solvent is then distilled off.

4. An aqueous coating material as claimed in any of claims 1 to 3, which contains, as component (B), calcite, dolomite, chalk, calcium ferrites, calcium molybdates and/or calcium oxide-modified aluminates, silicates or aluminium silicates.

5. An aqueous coating material as claimed in any of claims 1 to 4, which contains, as component (C), a monoester of phosphoric acid whose alcohol component is derived from a compound of the formula

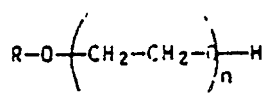

where R is $C_6$-$C_{18}$-alkyl and n is from 3 to 25.

6. A process for the preparation of an aqueous coating material as claimed in any of claims 1 to 5, wherein an aqueous suspension of pigments or fillers (B) is first prepared in the presence of the dispersant (C), and the binder (A) is then incorporated into the resulting suspension.

7. Use of an aqueous coating material as claimed in any of claims 1 to 5 as an anticorrosion paint or road marking paint.

**Revendications**

1. Matières de revêtement aqueuses à base de dispersions secondaires de copolymères contenant des radicaux carboxyle d'esters de l'acide acrylique ou de l'acide méthacrylique, de pigments ou de charges, comme éventuellement aussi d'adjuvants usuels, caractérisées en ce que les matières de revêtement contiennent ou se composent

(A) de dispersions secondaires de copolymères contenant des radicaux carboxyle d'esters de l'acide acrylique ou de l'acide méthacrylique, d'un indice d'acidité de 15 à 150 et d'une valeur K de 22 à 50, à titre de liants,
(B) d'au moins 5% en poids, par rapport à la teneur en corps solides des liants (A), de pigments et/ou de charges, qui contiennent, à chaque fois, un composé du calcium ou du magnésium et
(C) de 0,1 à 10% en poids, par rapport aux composants (B), de monoesters de l'acide phosphorique, dont le composant alcool provient de composés répondant à la formule

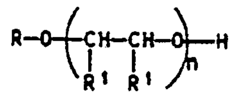

dans laquelle R représente un radical alkyle en $C_4$ à $C_{24}$, phényle, alkyl($C_1$-$C_{18}$)-phényle,
$R^1$ représente un atome d'hydrogène, le radical $CH_3$, $CH_2$ et
n a une valeur qui varie de 1 à 50,
à titre d'agents dispersifs, où la concentration volumique du composant (B) varie de 2 à 70% en volume par rapport aux corps solides de (A) et de (B).

2. Matières de revêtement aqueuses selon la revendication 1, caractérisées en ce que l'on peut obtenir les liants (A) par la copolymérisation de

a) 80 à 98,5% en poids d'au moins un ester de l'acide acrylique ou de l'acide méthacrylique avec un monoalcanol linéaire ou ramifié, qui contient de 1 à 20 atomes de carbone, où ces esters de l'acide (méth)acrylique peuvent être remplacés par jusqu'à 65% en poids de composés vinylaromatiques, d'esters vinyliques copolymérisables contenant de 4 à 14 atomes de carbone, ou de diesters d'acides dicarboxyliques à insaturation oléfinique, copolymérisables, comportant de 6 à 32 atomes de carbone,
b) 1,5 à 20% en poids d'au moins un composé organique à insaturation oléfinique, contenant de 3 à 10 atomes de carbone et comportant au moins un groupe carboxyle ou anhydride d'acide carboxylique et
c) 0 à 30% en poids d'autres composés organiques à insaturation oléfinique, copolymérisables, non cités sous a) et b), qui présentent un radical hydrophile, avec la condition que la somme des pourcentages cités sous a) à c) soit égale à 100 et que l'on réalise la copolymérisation dans un solvant organique, au moins partiellement miscible à l'eau, on disperse le copolymère ainsi obtenu dans de l'eau, sous addition d'ammoniac ou d'amines et on chasse éventuellement ensuite le solvant excédentaire par distillation.

3. Matières de revêtement aqueuses selon la revendication 1, caractérisées en ce que le liant (A) se compose de 25 à 75% en poids d'un composant I et de 25 à 75% en poids d'un composant II, où la somme des pourcentages cités à propos de I et de II est égale à 100, le composant I est un copolymère qui contient, incorporés par polymérisation,

(a) 80 à 98,5% en poids d'au moins un ester de l'acide acrylique ou de l'acide méthacrylique avec un monoalcanol contenant de 1 à 20 atomes de carbone, sans autres radicaux fonctionnels, où jusqu'à 65% en poids de ces esters de l'acide acrylique ou de l'acide méthacrylique peuvent être remplacés par des composés vinylaromatiques,
(b) 1,5 à 20% en poids d'au moins un composé organique, contenant de 3 à 10 atomes de carbone, à insaturation oléfinique, copolymérisable, comportant au moins un radical carboxyle ou anhydride d'acide carboxylique et
(c) 0 à 30% en poids d'autres composés organiques, à insaturation oléfinique, copolymérisables, dépourvus de radicaux carboxyle et anhydride d'acide carboxylique, non cités sous (a) et (b),

où la somme des pourcentages cités sous (a) à (c) est toujours égale à 100 et le composant II est un copolymère constitué exclusivement des comonomères (a) et (c), avec la condition que l'on polymérise d'abord l'un des deux composants I ou II dans un solvant organique et que l'on polymérise ensuite l'autre composant dans la solution de polymère ainsi obtenue, on disperse alors le mélange de I et de II qui en résulte dans de l'eau sous addition d'ammoniac ou d'amines et on chasse éventuellement ensuite le solvant excédentaire par distillation.

4. Matières de revêtement aqueuses suivant les revendications 1 à 3, caractérisées en ce qu'elles contiennent, à titre de constituant (B), de la calcite, de la dolomie, de la craie, de la ferrite de calcium, des molybdates de calcium et/ou des aluminosilicates, des silicates ou des aluminates modifiés à l'oxyde de calcium.

5. Matières de revêtement aqueuses suivant les revendications 1 à 4, caractérisées en ce qu'elles contiennent, à titre de constituant (C), des monoesters de l'acide phosphorique dont le composant alcool provient de composés de la formule

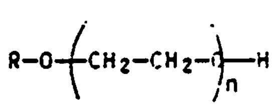

dans laquelle R représente un radical alkyle en $C_6$ à $C_{18}$ et
n a une valeur qui fluctue de 3 à 25.

6. Procédé de préparation des matières de revêtement aqueuses selon les revendications 1 à 5, caractérisé en ce que l'on prépare d'abord une suspension aqueuse de pigments ou de charges (B) en présence de l'agent dispersif (C) et on incorpore ensuite le liant (A) à la suspension ainsi obtenue.

7. Utilisation des matières de revêtement aqueuses suivant les revendications 1 à 5, à titre de peintures de protection contre la corrosion et de marquage des rues ou chaussées carrossables.